# EUROPEAN PATENT APPLICATION

(11) **EP 2 541 010 A1**
(43) Date of publication of application: **02.01.2013**
(21) Application number: 11171730.2
(22) Date of filing: 28.06.2011
(51) Int. Cl.: F01N 3/20

(54) **Pump assembly**

(71) Applicant: Delphi Technologies Holding S.à.r.l., 4940 Bascharage (LU)
(72) Inventor: Wright, Keith, Chatham, Kent ME5 7RS (GB)
(74) Representative: Gregory, John David Charles

(57) **Abstract**

A pump assembly (100) for use in a selective catalytic reduction system, the pump assembly comprising: a pump sub-assembly (12) defining a pump axis (A); and a housing sub-assembly (30) including a cavity (120) for receiving the pump sub-assembly and comprising an inlet port (52) for receiving a reagent for supply to the pump sub-assembly via a flow path (130, 132, 142); wherein at least one seal member (124, 126, 138) is provided to seal the pump sub-assembly within the housing sub-assembly, the seal member being provided in a groove (140) in an outer face of the pump sub-assembly, the seal member providing a fluid tight seal.

## Description

### Field of the invention

The present invention relates to a pump assembly. More particularly, but not exclusively, the invention relates to a dosing pump for a selective catalytic reduction system.

### Background to the invention

It is known that exhaust gases from internal combustion engines contain substances which are harmful to the environment and which can pose a threat to public health. For many years, a sustained effort has been made within the automotive industry to reduce the release to the atmosphere of harmful substances carried in exhaust gases, both by modifying the combustion process itself to give a reduced yield of harmful combustion products, and by treating the exhaust gases before their emission into the atmosphere, for example by providing a catalyst to induce chemical breakdown of the harmful constituents, particularly the oxides of nitrogen (NOₓ), into benign compounds.

One strategy for reducing NOₓ emissions, known as selective catalytic reduction or SCR, involves the introduction of a reagent comprising a reducing agent, typically a liquid ammonia source such as an aqueous urea solution, into the exhaust gas stream. The reducing agent is injected into the exhaust gas upstream of an exhaust gas catalyst, known as an SCR catalyst, typically comprising a mixture of catalyst powders such as titanium oxide, vanadium oxide and tungsten oxide immobilised on a ceramic honeycomb structure. Nitrogen oxides in the exhaust gas undergo a catalysed reduction reaction with the ammonia source on the SCR catalyst, forming gaseous nitrogen and water. An example of an SCR system is described in the Applicant's European Patent Application Publication No. EP-A-2131020, the contents of which are hereby incorporated by reference.

SCR systems typically include a reagent dosing pump for delivering reagent to the exhaust gas stream.

In one known reagent dosing pump, a solenoid-actuated pumping arrangement is provided to increase the pressure of the reagent, and the pump includes an atomising nozzle that receives the reagent from the pumping arrangement and delivers it from an outlet end into the exhaust gas stream. The nozzle is close-coupled to the pumping arrangement, so that the nozzle and the pumping arrangement form a single unit. The outlet end of the nozzle may be positioned directly in the exhaust gas stream, so that the pumping arrangement is located close to the outside of the exhaust pipe that conveys the exhaust gases.

Examples of such pumps are described in the Applicant's European Patent Application Publication No. EP-A-1878920, the contents of which are hereby incorporated by reference.

The pumping work conducted by the dosing arrangement of such solenoid actuated pumps is created by a solenoid coil acting on the magnetic armature of a plunger armature assembly.

The maximum temperature at which urea-based reducing agents can be used is somewhat limited. Urea crystals tend to precipitate when the temperature of the solution is greater than approximately 70°C. Precipitation is undesirable because the precipitates can cause blockages in the delivery system, for example in the small-diameter outlets typically provided in the outlet end of the atomising nozzle. In addition, the formation of precipitates alters the concentration of the remaining solution, so that the effective quantity of ammonia delivered to the exhaust flow becomes uncertain. This could lead to inefficient catalysis and an insufficient reduction in NOₓ emissions.

It is therefore desirable, in many cases, to provide cooling means to cool the reagent in an SCR system and, in particular, in the reagent dosing pump, to prevent overheating of the reagent. Furthermore, when solenoid-actuated pumping arrangements are used, it is also desirable to cool the solenoid coil since the performance of solenoid actuators can decrease at high temperatures. Many known pump assembly arrangements therefore include a water cooling system, e.g. by means of the provision of a water jacket around the solenoid actuator and the provision of water input and output ports to the jacket in order to provide a flow of cooling water.

In designing and optimising pump assemblies there are a number of requirements that need to be considered. Firstly, packaging of the pump assembly within the engine system is increasingly challenging. The mass of such an assembly is also important in ensuring the product is robust in its attachment to a thin walled exhaust section, and subsequent vibrations seen in use. And finally, one further issue which is important to the integration of a new water cooled product in such an environment is the heat input in to the water cooling system.

One area which drives opportunities to improve all of the above points is size and arrangement of the solenoid coil. On the design described in EP1878920, a terminal block is provided to interface between the coil windings of the solenoid coil of the actuator and an electrical supply cable (the solenoid cable). However, this approach increases the packaging size of the coil, and hence the water jacket required to house it. There is therefore a knock on effect which impactes the size, mass and surface area of the doser exposed to the high ambient temperature environment.

It is therefore an object of the present invention to provide a pump assembly for use in an engine system that substantially overcomes or mitigates the above mentioned problems.

### Summary of the invention

According to a first aspect of the present invention there is provided a pump assembly for use in a selective catalytic reduction system, the pump assembly comprising: a pump sub-assembly defining a pump axis (A); and a housing sub-assembly including a cavity for receiving the pump sub-assembly and comprising an inlet port for receiving a reagent for supply to the pumping sub-assembly via a flow path; wherein at least one seal member is provided to seal the pump sub-assembly within the housing sub-assembly, the seal member being provided in a groove in an outer face of the pump sub-assembly, the seal member providing a fluid tight seal.

The present invention provides a pump assembly which seeks to simplify assembly by substantially moving the complexity to one outsourced subassembly. In particular, the invention provides a pump assembly comprising housing and pump sub-assemblies in which an outer surface of the pump sub-assembly is provided with grooves for receiving seal member(s) to provide fluid tight seals within the pump assembly. By providing the seal members within grooves located on one component (the pump sub-assembly) the level of machining necessary in the housing sub-assembly (which would generally be made of a cast metal) is reduced which reduces the complexity of the housing sub-assembly and also saves costs on producing the housing.

The pump assembly may conveniently comprise seal member(s) between internal sections of the pump assembly to provide fluid tight seals between the reagent and, for example, a cooling fluid such as water. In such an arrangement therefore the pump assembly conveniently further comprises a compartment defined in part by the pump and housing sub-assemblies wherein the at least one seal member comprises a compartment seal member arranged to separate the compartment and flow path, the compartment seal member being provided in a groove in an outer face of the pump sub-assembly, the compartment seal member providing a fluid tight seal between the compartment and the flow path.

The pump assembly may also conveniently comprise seal member(s) between an internal section of the pump assembly and an opening in the housing sub-assembly. In such an arrangement therefore the housing sub-assembly may conveniently comprise a drilling having an opening in an outer surface of the housing sub-assembly, and the pump sub-assembly comprises a neck portion of substantially complementary shape to the drilling wherein the at least one seal member comprises a drilling seal member arranged to seal the neck portion in the drilling, the drilling seal member being provided in a groove in an outer face of the neck portion of the pump sub-assembly and providing a fluid tight seal between the opening of the drilling and the flow path.

The neck portion may be disposed about axis A and define a bore arranged to receive electrical connector means for connection to a solenoid coil. The axis of the bore may be coincident with axis A.

The pump sub-assembly may conveniently comprise a pump core, an outer pole member and a solenoid coil, the core, pole member and coil being provided within a coil over-moulding member.

Preferably the over-moulding member may be formed from plastic. It is noted that the plastic over-moulding member may be processed more easily than the housing sub-assembly to provide the grooves required to receive the seal members.

Conveniently the flow path comprises one or more flow ports provided through the body of the over-moulding member.

Conveniently a reagent gallery may be defined between the housing and pump sub-assemblies, the one or more flow ports being arranged to open into the gallery and the gallery being in fluid communication with the inlet port.

Conveniently the housing sub-assembly may define a reagent passage from the inlet port to the gallery, the flow path being provided by the reagent passage, the gallery and the one or more flow ports.

In order to improve reagent flow into the pump assembly the body of the over-moulding member may comprise a plurality of flow ports.

Where the pump sub-assembly comprises a metallic back plate, the back plate preferably comprises one or more drillings arranged such that each flow port aligns with a drilling.

Where the pump assembly is connected to an electrical connector member the electrical connections provided by the member (the solenoid coil cable) may conveniently be routed through the over-moulding member in between the reagent flow ports leading to the solenoid coil.

According to a second aspect of the present invention there is provided a method of manufacturing a pump assembly comprising manufacturing a pump sub assembly by: providing a blank disk member of a material having a relatively high magnetic permeability; deep drawing the blank disk member to form an outer pole piece, the outer pole piece defining an internal volume with an opening; providing a coil former, the coil former defining an internal volume; winding coil wire onto the coil former to form a solenoid coil; inserting the solenoid coil into the internal volume of the outer pole piece; pressing a back stop plate into the outer pole piece, the back stop plate having at least one drilling through the plate; injection moulding an over-mould member to encapsulate the outer pole piece and solenoid coil; forming at least one flow port through the over-moulding member, the at least one flow port aligning with the at least one drilling in the back stop plate; forming at least one groove in the outer face of the over-mould member.

The method may further comprise inserting an actuator pump core into the internal volume of the coil former.

The method may further comprise placing an O ring sealing member into the at least one groove in the outer face of the over-mould member and inserting the pump sub-assembly into a housing sub-assembly.

Preferred and/or optional features of each aspect of the invention may be used, alone or in appropriate combination, in the other aspects also.

### Brief description of the drawings

Embodiments of the present invention will now be described, by way of example only, with reference to the accompanying drawings, in which like reference numerals are used for like parts, and in which:
Figure 1 shows a known pump assembly;
Figure 2 shows a pump assembly according to an embodiment of the present invention.

### Detailed description of embodiments of the invention

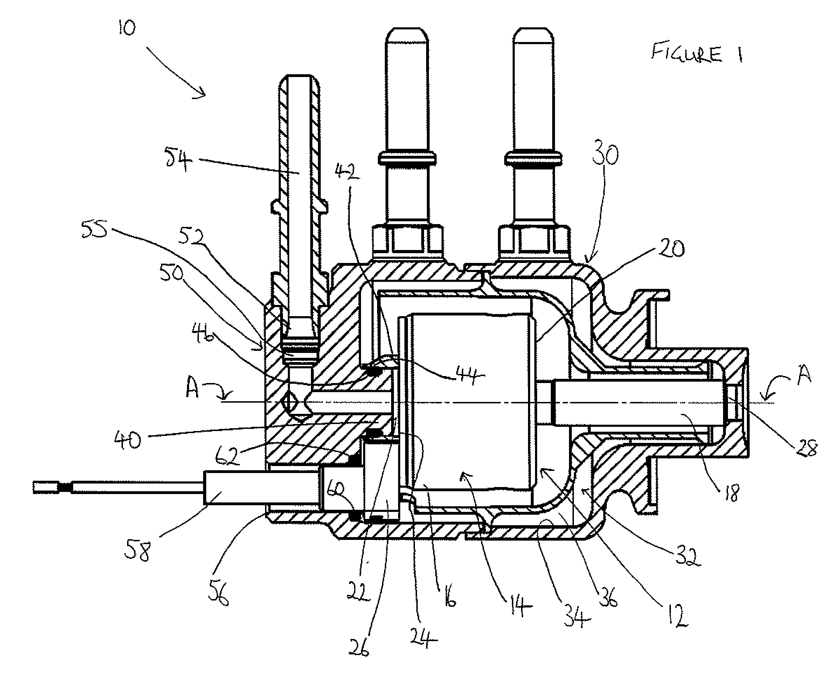

A known pump assembly 10 is shown in Figure 1.

Referring Figure 1, the pump assembly 10 includes a reagent dosing unit with an integrated pump and nozzle arrangement, referred to hereafter as a reagent dosing pump sub-assembly 12. The pump sub-assembly 12 is a reagent dosing pump of any suitable type, for example as described in EP-A-1878920, to which reference can be made for further details of the pump sub-assembly 12.

The pump sub-assembly 12 comprises a pump housing 14 having a generally cylindrical pump body portion 16 that defines a pump axis (axis A in Figure 1), and a generally cylindrical nozzle portion 18 that extends from a first face 20 of the body portion 16 along the pump axis A. The nozzle portion 18 has a relatively small diameter compared to the body portion 16.

The body portion 16 of the pump housing 14 houses a pumping mechanism (not shown), such as a solenoid-actuated pumping mechanism. In use, the pumping mechanism receives reagent through a reagent inlet 22 provided on a second face 24 of the body portion 16, opposite the first face 20. An electrical connection point 26 is also located on the second face 24 of the body portion 16, to provide an operating current to the solenoid actuator of the pumping mechanism. As is known from EP-A-1878920, the pumping mechanism includes a reciprocating pumping element, such as a plunger or piston, and is arranged to increase the pressure of a pre-defined quantity of reagent on each cycle of the pumping element.

The nozzle portion 18 of the pump housing 14 houses a delivery passage (not shown) that, in use, receives the pressurised reagent from the pumping mechanism, and conveys it to a reduced-diameter outlet end 28 of the nozzle portion 18. The outlet end 28 houses an atomising nozzle that atomises the reagent as it exits the pump sub-assembly 12.

The pump assembly 10 also includes a housing sub-assembly 30 having an internal cavity 32 in which the pump 12 is received. The cavity 32 is defined by an internal wall 34 of the housing sub-assembly 30. In general terms, the shape of the cavity 32 is an enlarged version of the shape defined by the pump housing 14. In this way, the internal wall 34 of the cavity 32 is spaced from the pump housing 14 to define a volume/compartment 36 for cooling fluid therebetween.

The housing sub-assembly 30 is generally made from cast stainless steel.

In a region of the housing sub-assembly 30 remote from the outlet end 18 of the pump, a projection or land 40 extends axially from the internal wall 34 of the cavity 32 towards the outlet end 18 of the pump, to meet the inlet port 22 on the second face 24 of the housing pump body portion 16. A collar 42 is provided on the second face 24 of the pump body portion 16 that receives the land 40. An O-ring 44 is provided to create a fluid-tight seal between the collar 42 and the land 40. The O-ring 44 is received in an annular ring 46 machined into the body of the housing sub-assembly 30.

The seal provided by the O-ring 44 prevents leakage of reagent into the compartment 36 between the land 40 of the housing sub-assembly 30 and the collar 42 of the pump housing 14.

The end of the housing sub-assembly 30 remote from the outlet end 18 comprises a connection block 50 of generally cuboidal shape. A top face of the connection block 50 is provided with a reagent inlet port 52 that receives a tubular reagent inlet connector 54. The inlet connector 54 extends radially with respect to the pump axis A and is connected to a reagent supply line (not shown) in use.

A filter 55 is located in the flow path between the inlet connector 54 and the reagent inlet 22 of the pump 12. In this embodiment, the filter 55 is received in the inlet port 54. The filter 55 is conveniently a disc filter, arranged to prevent particulate contaminants in the reagent, such as urea crystals, from entering the pump 12.

The connection block 50 is also provided with a drilling 56 to admit an electrical connector 58. The electrical connector 58 connects with the electrical connection point 26 of the pump 12. A further O-ring 60 is provided to seal the electrical connector 58 in the drilling 56. The O-ring 60 is again provided in an annular groove 62 provided in the body of the housing sub-assembly.

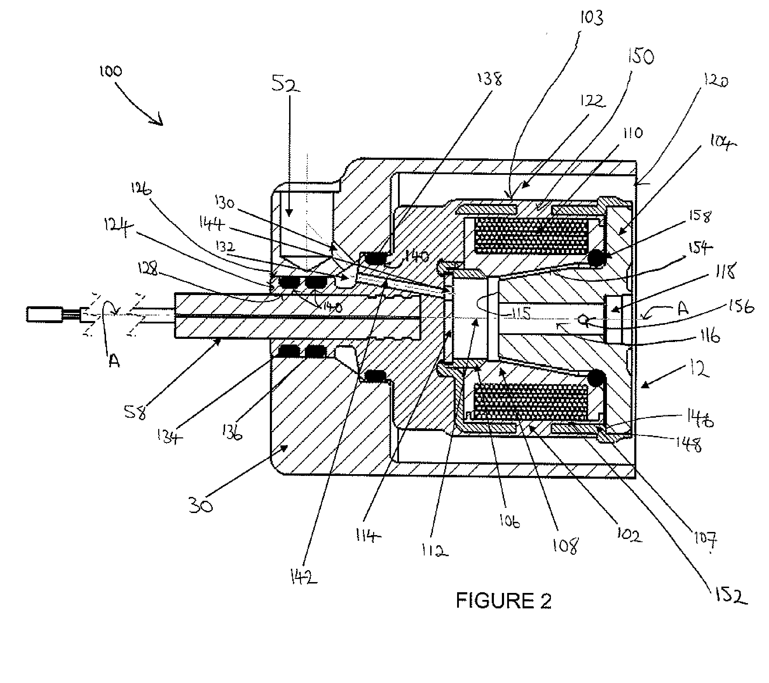

Figure 2 shows a pump assembly 100 in accordance with an embodiment of the present invention. Like features between Figures 1 and 2 are referred to with reference to the same reference numerals

The pump assembly 100 of Figure 2 comprises a pump sub-assembly 12 contained within a water cooled housing sub-assembly 30.

The pump sub-assembly 12 comprises an over-moulding member 102 and a solenoid actuator 103, the solenoid actuator 103 comprising: an actuator core (also referred to as pump core or inner pole piece) 104, an outer pole piece 106, a magnetic sleeve 107, a bobbin 108 and a solenoid coil 110, the solenoid coil being carried on the bobbin. The components of the actuator are, in turn, supported by the over-moulding member. A pumping region 112 within the pump sub-assembly 12 is provided by a volume defined by the outer pole piece 106, a back plate member 114 and a top face 115 of the actuator core 104. A bore 116 is provided within the actuator core 104. At the end of the bore remote from the pumping region 112 is a pumping chamber region 118.

The housing sub-assembly 30 comprises a cavity 120 for receiving the pump sub-assembly 12, the cavity being dimensioned such that a compartment 122 is defined between the housing 30 and pump 12 sub-assemblies in the general region of the solenoid actuator 103. In use, a coolant, e.g. water, is supplied via a hydraulic connector (not shown in Figure 2) to the compartment 3 to provide water cooling of the actuator.

The housing sub-assembly 12 comprises a reagent inlet port 52 wherein a reagent connector (not shown) can be interfaced with the housing sub-assembly 30 in order to supply a reagent, e.g. Adblue reagent.

The pump sub-assembly 12 further comprises a neck portion 124 remote from the solenoid actuator, the neck portion being dimensioned to be received within a drilling 126 in the body of housing sub-assembly 30. The neck portion 124 in turn comprises a bore 128 that is coincident with the pump assembly axis A. In use, the bore 128 receives an electrical connector cable 58 for connection to terminals of the solenoid coil wire 110.

The reagent flows from the inlet port 52 through a second drilling 130 in the housing sub-assembly 30 to a radial gallery 132 defined between the housing sub-assembly 30 and the neck portion 124 of the pump sub-assembly 12. The gallery 132 permits assembly of the pump sub-assembly into the housing sub-assembly and also allows orientation of the pump sub-assembly relative to the housing sub-assembly during this process.

The reagent gallery 132 is sealed from the outside environment in the region of the neck portion 124 by two O ring seals (134, 136) and sealed from the main housing water chamber 122 via a third O ring seal 138, all of which are retained by suitable O Ring grooves 140 moulded as part of the coil over-moulding member 102. Although, two O rings are shown (134, 136) in the neck portion 124 of the pump sub-assembly, it is noted that a single O ring seal would be sufficient for this primary function.

From the gallery 132, reagent is then routed through the coil over-moulding member 102 via a number of flow ports 142, one of which is visible in Figure 2. It is however noted that three or four ports could be provided equispaced around the axis A to provide efficient fluid communication between the gallery 132 and the internal pumping region 112 of the pump sub-assembly 12.

As reagent exits the flow port 142 it then passes through a drilling 144 in the non magnetic plunger back stop plate 114 before entering the pumping region 112. With the reagent delivered to the pumping zone 112, the flow path resumes the route as described in EP1878920. Note that the drilling 144 may be a port that is drilled or manufactured by other means (e.g. produced by stamping/fine blanking etc.).

It is noted that the drilling 144 in the back plate 114 is arranged during assembly to line up with the port 142 in the over-moulding member 102. In the event of multiple ports 142 the back stop plate would comprise an equal number of drillings 144 in the same orientation as the ports 142.

The over-moulding member 102 is formed via an injection moulding method. One potential method for manufacturing the ports and aligning them with the drillings 144 of the back stop plate 114 would be to align the drillings 144 of the back plate 114 with the removable cores of a mould tool when injection moulding the over-moulding member 102. Alignment is important as it permits the routing of the solenoid coil cable 58 to the coil wire terminals (not shown) which would need to pass within (in between) the gaps of the reagent ports 142.

To allow the assembly of the plunger back stop accurately and for the solenoid to operate correctly the magnetic outer pole piece 106 and magnetic outer sleeve 107 are formed from one deep drawn component, which also incorporates a locating face 146 and crimp feature 148 for the pump core 104. Forming the outer pole piece 106 and magnetic outer sleeve 107 via a deep draw process reduces material waste compared to a process where the components are formed by machining.

The pump sub-assembly 12 may therefore be assembled by winding the coil wire 110 around the coil former or bobbin 108. The wound coil former (110, 108) can then be slid into the magnetic drawn component 107, which will have a slot (not shown in this view) to receive the bobbin terminals. Then with the back plate 114 in place, and flow port 142 cores aligned to the back plate ports 144 over moulding will take place over the whole pump sub-assembly 12. Holes 150 in the magnetic outer sleeve 107 permit filling of the volume 152 between the coil windings 110 and the outer sleeve inside face 107.

The axial positioning of the coil wire 58 allows the water cooled cavity 122 within the housing to be optimized and sized primarily for the purposes of cooling. The overall outside diameter of the housing sub-assembly 30 may therefore be reduced.

As noted above, the pumping mechanism of the pump sub-assembly is known from, for example EP-A-1878920. Briefly however, a supply passage 154 is defined by an annular cavity between the coil former 108 and the actuator core 104. A plurality of filling ports 156 (of which one is shown in Figure 2) comprising a radial through bore, extend from the axial bore 116 to the supply passage 154.

A reciprocating pumping element, such as a plunger or piston (not shown in Figure 2) is slidably accommodated within the bore 116. A disc-shaped armature (also not shown in Figure 2) is attached to the plunger.

In order to dispense reagent, a current is passed through the solenoid coil 110 to energise the coil and induce a magnetic field around the coil. The resulting magnetic field exerts a force on the armature which, in turn, drives a pumping stroke of the plunger. By means of the reciprocating plunger reagent is pumped from the internal pumping region 112 via the passage 154 and ports 156 to the pumping chamber 118 and then out to an adjoining nozzle tube (not shown in Figure 2). A further seal member 158 is provided between the coil former 108 and actuator core 104.

Further variations and modifications not explicitly described above may also be contemplated without departing from the scope of the invention as defined in the appended claims.

## Claims

1. A pump assembly (100) for use in a selective catalytic reduction system, the pump assembly comprising:
a pump sub-assembly (12) defining a pump axis (A); and
a housing sub-assembly (30) including a cavity (120) for receiving the pump sub-assembly and comprising an inlet port (52) for receiving a reagent for supply to the pump sub-assembly via a flow path (130, 132, 142);
wherein at least one seal member (124, 126, 138) is provided to seal the pump sub-assembly within the housing sub-assembly, the seal member being provided in a groove (140) in an outer face of the pump sub-assembly, the seal member providing a fluid tight seal.

2. A pump assembly as claimed in Claim 1, further comprising a compartment (122) defined in part by the pump and housing sub-assemblies wherein the at least one seal member comprises a compartment seal member (138) arranged to separate the compartment and flow path, the compartment seal member being provided in a groove in an outer face of the pump sub-assembly, the compartment seal member providing a fluid tight seal between the compartment and the flow path.

3. A pump assembly as claimed in Claim 1 or 2, wherein the housing sub-assembly comprises a drilling (126) having an opening in an outer surface of the housing sub-assembly, and the pump sub-assembly comprises a neck portion (124) of substantially complementary shape to the drilling wherein the at least one seal member comprises a drilling seal member (124, 126) arranged to seal the neck portion in the drilling, the drilling seal member being provided in a groove in an outer face of the neck portion of the pump sub-assembly and providing a fluid tight seal between the opening of the drilling and the flow path.

4. A pump assembly as claimed in Claim 3, wherein the neck portion is disposed about axis A and defines a bore (128) arranged to receive electrical connector means (58) for connection to a solenoid coil (110).

5. A pump assembly as claimed in any preceding claim, wherein the pump sub-assembly comprises a pump core (104), an outer pole member (106) and a solenoid coil (110), the core, pole member and coil being provided within a coil over-moulding member (102).

6. A pump assembly as claimed in Claim 5, wherein the over-moulding member is formed from plastic.

7. A pump assembly as claimed in Claim 5 or 6, wherein the flow path comprises one or more flow ports (142) provided through the body of the over-moulding member.

8. A pump assembly as claimed in Claim 7, wherein a reagent gallery (132) is defined between the housing and pump sub-assemblies, the one or more flow ports (142) being arranged to open into the gallery and the gallery being in fluid communication with the inlet port (52).

9. A pump assembly as claimed in Claim 8, wherein the housing sub-assembly defines a reagent passage (130) from the inlet port to the gallery, the flow path being provided by the reagent passage, the gallery and the one or more flow ports.

10. A pump assembly as claimed in any one of Claims 7 to 9, wherein the body of the over-moulding member comprises a plurality of flow ports (142).

11. A pump assembly as claimed in Claim 10, wherein the pump sub-assembly comprises a metallic back plate (114) having one or more drillings (144), each flow port being arranged to align with a drilling.

12. A pump assembly as claimed in either of Claims 10 or 11 when dependent on Claim 4, wherein solenoid coil cable from the electrical connector member (58) is routed through the over-moulding member between reagent flow ports to the solenoid coil.

13. A method of manufacturing a pump assembly comprising manufacturing a pump sub assembly by:
providing a blank disk member of a material having a relatively high magnetic permeability;
deep drawing the blank disk member to form an outer pole piece, the outer pole piece defining an internal volume with an opening;
providing a coil former (108), the coil former defining an internal volume;
winding coil wire (110) onto the coil former to form a solenoid coil;
inserting the solenoid coil into the internal volume of the outer pole piece (106);
pressing a back stop plate (114) into the outer pole piece, the back stop plate having at least one drilling through the plate;
injection moulding an over-mould member (102) to encapsulate the outer pole piece and solenoid coil;
forming at least one flow port (142) through the over-moulding member, the at least one flow port aligning with the at least one drilling in the back stop plate;
forming at least one groove (140) in the outer face of the over-mould member.

14. A method as claimed in Claim 13, further comprising inserting an actuator pump core into the internal volume of the coil former.

15. A method as claimed in Claim 13 or 14 comprising placing an O ring sealing member into the at least one groove in the outer face of the over-mould member and inserting the pump sub-assembly into a housing sub-assembly.
